# EUROPÄISCHE PATENTSCHRIFT

(11) **EP 2 200 797 B1**
(45) Veröffentlichungstag und Bekanntmachung des Hinweises auf die Patenterteilung: **30.11.2011**
(21) Anmeldenummer: 08840102.1
(22) Anmeldetag: 25.09.2008
(51) Int. Cl.: B29C 35/08, B29C 70/30

(54) **VERFAHREN ZUM HERSTELLEN EINES FASERVERBUNDBAUTEILS**
METHOD FOR PRODUCING A FIBRE-COMPOSITE COMPONENT
PROCÉDÉ DE FABRICATION D'UNE PIÈCE EN MATÉRIAU COMPOSITE RENFORCÉ PAR DES FIBRES

(30) Priorität: 18.10.2007 DE 102007050312
(43) Veröffentlichungstag der Anmeldung: 30.06.2010
(73) Patentinhaber: Airbus Operations GmbH, 21129 Hamburg (DE)
(72) Erfinder: GRÄBER, Rainer, 22765 Hamburg (DE); PODKORYTOV, Maksim, 38106 Braunschweig (DE); MEYER, Matthias, 50823 Köln (DE); HERBECK, Lars, 38173 Veltheim (DE)
(74) Vertreter: Plöger, Jan Manfred
(86) Internationale Anmeldenummer: PCT/DE2008/001585
(87) Internationale Veröffentlichungsnummer: WO 2009/049583

(56) Entgegenhaltungen:
- EP-A- 0 347 299

## Beschreibung

Die Erfindung betrifft ein Verfahren zum Herstellen eines Faserverbundbauteils, mit den Schritten: (a) Einbringen eines Vorkörpers aus Fasern und Matrixmaterial in ein Formwerkzeug, wobei der Vorkörper einen umlaufenden Vorkörperrand besitzt, und (b) Bestrahlen des Vorkörpers mit Mikrowellen, so dass ein Faserverbundbauteil entsteht.

Faserverbundbauteile aus faserverstärkten Kunststoffen sind innovative Materialien, die aus zwei Komponenten bestehen, nämlich (Verstärkungs-) Fasern und einem Matrixmaterial. Immer mehr Bauteile, insbesondere in hochtechnologischen Industriezweigen, wie in der Luft- und Raumfahrt und im Automobilbau, werden nicht länger aus Metall, sondern aus beispielsweise kohlenstofffaserverstärkten Thermo- oder Duroplasten hergestellt.

Zum Herstellen des Faserverbundbauteils wird regelmäßig thermische Energie eingesetzt. Nachdem der Vorkörper aus Fasern und Matrixmaterial in das Formwerkzeug eingebracht ist, werden beide erwärmt. Dadurch kommt es zum Auslösen einer Polymerisation des Matrixmaterials und die Fasern und das Matrixmaterial verkleben miteinander, so dass das Faserverbundbauteil entsteht.

Beispielsweise kann über Konvektion erwärmt werden. Zum Erwärmen des Vorkörpers kann alternativ ein Mikrowellenfeld verwendet werden. Durch die Interaktion mit dem Mikrowellenfeld werden Dipolmoleküle des Matrixmaterials in Schwingung versetzt, so dass sich das Matrixmaterial erwärmt. Es hat sich gezeigt, dass sich beim Bestrahlen mit Mikrowellen in dem Vorkörper starke Temperaturgradienten ausbilden. Die höchsten Temperaturen werden an den Rändern des Vorkörpers bzw. des entstehenden Faserverbundbauteils festgestellt. Derartige Temperaturgradienten sind unerwünscht und wurden bisher dadurch vermindert, dass an den Rändern des Vorkörpers Metallfolien befestigt werden, die die Mikrowellenstrahlung abschirmen. Nachteilig hieran sind der hohe manuelle Aufwand beim Aufbringen der Metallfolien und das Risiko, dass auf Grund fehlerhaft aufgebrachter Metallfolien Fehler im entstehenden Faserverbundbauteil hervorgerufen werden.

Aus der DE 103 60 743 A1 ist ein Verfahren zur Herstellung von Strukturbauteilen aus Faserverbundkunststoffen bekannt, das zwei Verfahrensschritte umfasst, nämlich ein Vorformen und ein Umformen. Auf die Anordnung des umlaufenden Rands im Formwerkzeug wird nicht eingegangen.

Aus der DE 197 31 903 A1 ist ein Verfahren zur Herstellung eines Dachmoduls oder Schiebedachs für Fahrzeuge bekannt. Dabei wird eine Schaumplatte allseits mit Epoxidharz getränkten Fasermatten umgeben und mittels einer Mehrschichtfolie bzw. mittels Stoff gegenüber einer Pressform isoliert in die Pressform eingebracht. Anschließend wird dieser mehrschichtige Aufbau zum Dachmodul verpresst. Aufgrund der Ummantelung mit der Mehrschichtfolie bzw. dem Stoff können keine Lichtbögen auftreten.

Aus der EP 0 347 299 A1 ist ein Verfahren zum Herstellen eines Faserverbundbauteils aus Glasfasern bekannt, bei dem eine Form aus Kunststoff eingesetzt wird. Die Form weist Druckteile auf, die auf den Vorkörper einen mechanischen Druck ausübt. Die Merkmale (a) und (c) werden in diesem Dokument offenbart.

Der Erfindung liegt die Aufgabe zu Grunde, Nachteile im Stand der Technik zu überwinden. Die Erfindung löst das Problem durch ein gattungsgemäßes Verfahren, bei dem der Vorkörper so in das Formwerkzeug eingebracht wird, dass der Vorkörperrand zumindest abschnittweise, bevorzugt aber im Wesentlichen vollständig in Kontakt mit dem Formwerkzeug gebracht wird.

Vorteilhaft an der Erfindung ist, dass die Ausbildung von Temperaturgradienten im Vorkörper bei Bestrahlung mit Mikrowellen vermindert wird. Es sind dadurch Faserverbundbauteile hoher Qualität herstellbar. Ein weiterer Vorteil ist, dass eine manuelle Vorarbeit weitgehend überflüssig wird, so dass sich das Verfahren gut zur Automatisierung eignet. Dadurch wird eine kostengünstige Fertigung bei gleichzeitig reproduzierbarer Qualität ermöglicht.

Vorteilhaft ist außerdem, dass die Erfindung leicht implementierbar ist. So erfordert sie lediglich neue Formwerkzeuge bzw. eine Modifikation der bestehenden Formwerkzeuge, die dann im Prinzip beliebig oft eingesetzt werden können.

Wenn es sich bei dem Vorkörper um ein im Wesentlichen quaderförmiges Bauteil handelt, so wird unter dem Vorkörperrand die Gesamtheit seiner Schmalseiten verstanden.

Der Vorkörper ist insbesondere homogen. Hier ist insbesondere zu verstehen, dass sein Aufbau vom Ort unabhängig ist. Insbesondere ist der Vorkörper nicht aus im Prinzip selbstständigen Unterkörpern aufgebaut. Beispielsweise ist der Vorkörper fügestellenfrei. Bei dem Vorkörper handelt es sich um ein Matrix-Material-Kohlenstofffaser-System und besteht der Vorkörper vorzugsweise ausschließlich aus diesen Fasern und Matrixmaterial.

Bei dem Bauteil handelt es sich bevorzugt um ein flächiges Bauteil. Hierunter ist insbesondere zu verstehen, dass das Bauteil nach Beendigung der Fertigung hinterschneidungsfrei ist oder lediglich an seinem Rand eine der Schneidungen aufweist. Beispielsweise handelt es sich bei dem flächigen Bauteil um ein Teil eines Flugzeugs. Beispielsweise ist das flächige Bauteil ein Teil des Rumpfs, der Flügel oder des Leitwerks.

Das Formwerkzeug ist so ausgebildet, dass die Mikrowellen beim Bestrahlen direkt auf den Vorkörper treffen. Das heißt, dass das Formwerkzeug im Bezug auf eine Mikrowellenquelle, die zum Bestrahlen des Vorkörpers mit Mikrowellen verwendet wird, hinterschneidungsfrei ist.

In einer bevorzugten Ausführungsform wird der Vorkörper im Wesentlichen vollständig mit dem Vorkörperrand in Kontakt mit dem Formwerkzeug gebracht. Unter dem Merkmal, dass der Vorkörper im Wesentlichen vollständig in Kontakt gebracht wird, ist zu verstehen, dass es nicht notwendig ist, dass der Vorkörper im streng mathematischen Sinne vollständig in Kontakt gebracht wird. Es ist vielmehr ausreichend, dass er an einzelnen, kleineren Abschnitten keinen Kontakt mit dem Formwerkzeug hat. Vorteilhaft hieran ist, dass der Vorkörper im Wesentlichen an seinem gesamten Rand hinreichend kleine Temperaturgradienten erfährt, um eine hohe Qualität des Faserverbundbauteils zu erreichen.

An der Stelle, an der es mit dem Vorkörperrand in Kontakt gebracht wird, hat das Formwerkzeug bevorzugt eine Dicke bzw. Tiefe, die hinreichend groß gewählt ist, so dass das Formwerkzeug in einer Umgebung des Vorkörperrands entstehende Wärme auf Grund seiner Wärmekapazität so weit aufnehmen kann, dass bei einer vorgegebenen Mikrowellenleistung eine vorgegebene Temperatur an keiner Stelle des Faserverbundbauteils überschritten wird.

Der Vorkörper wird abschattungsfrei mit Mikrowellen bestrahlt. Hierunter ist insbesondere zu verstehen, dass das Formwerkzeug hinterschneidungsfrei ist bzw. der Vorkörper von allen offen liegenden Seiten von den Mikrowellen erreicht werden kann. Insbesondere sind auf dem Vorkörper keine metallischen Folien angebracht.

Um neben dem thermischen Kontakt auch einen besonders guten elektrischen Kontakt zwischen dem Vorkörper und dem Formwerkzeug herzustellen, wird ein metallisches Formwerkzeug, verwendet. Das Formwerkzeug kann beispielsweise aus Stahl und/oder einer Nickellegierung gefertigt sein. Sofern beispielsweise an den Stellen des Formwerkzeugs, die mit dem Vorkörperrand in Kontakt kommen, eine besonders hohe thermische und/oder elektrische Leitfähigkeit gewünscht ist, werden bevorzugt thermisch bzw. elektrisch besonders leitfähige Metalle, wie beispielsweise Kupfer oder Silber eingesetzt.

Der Vorkörper wird so in das Formwerkzeug eingebracht, dass der Vorkörper mit dem Vorkörperrand in elektrischem Kontakt mit dem Formwerkzeug steht. In diesem Fall wird die Bildung von kleinen Lichtbögen zwischen den Fasern bzw. dem Matrixmaterial einerseits und dem Formwerkzeug andererseits vermindert oder gar vermieden. Die Bildung derartiger kleiner Lichtbögen wird auch als Arcing bezeichnet.

Zum Bestrahlen werden Mimikrowellen mit einer Intensität verwendet, die so gewählt werden, dass eine Lichtbogenbitdung gerade im Wesentlichen unterdrückt wird. Unter dem Merkmal, dass die Lichtbogenbildung im Wesentlichen unterdrückt wird, ist zu verstehen, dass es vorteilhaft, nicht jedoch notwendig ist, dass die Bildung von Lichtbögen vollständig unterdrückt wird. Es ist möglich, die Bildung von Lichtbögen in dem Umfang zu tolerieren, der die spätere Benutzbarkeit des entstehenden Faserverbundbauteils nicht maßgeblich beeinträchtigt.

Um den Temperaturgradienten am Rand besonders wirkungsvoll zu unterdrücken, ist in einer bevorzugten Ausführungsform vorgesehen, dass der Vorkörper in ein gekühltes, insbesondere ein aktiv gekühltes, Formwerkzeug angebracht wird, wobei das Formwerkzeug insbesondere an Stellen gekühlt wird, die mit dem Vorkörperrand in Kontakt stehen. Es ist alternativ auch möglich, dass das Formwerkzeug an solchen Stellen gekühlt wird, die im ganz Allgemeinen im Kontakt mit äußeren Bereichen des Vorkörpers stehen. Sofern es zu Temperaturgradienten im Randbereich des Vorkörpers kommt, kann dem durch aktive Kühlung entgegengewirkt werden.

Die Fasern umfassen Kohlenstofffasern. Auf Grund der elektrischen Leitfähigkeit der Kohlenstofffasern sind Vorkörper aus Kohlenstofffasern und Matrixmaterial besonders anfällig für die Bildung von Lichtbögen und für Temperaturgradienten im Randbereich. Besonders bevorzugt ist das Matrixmaterial durch Polymerisation, insbesondere durch wärmeinduzierte Polymerisation aushärtbar. Der Wärmeeintrag kann der alleinige polymerisationsauslösende Mechanismus sein, muss es aber nicht.

Im Folgenden wird die Erfindung an Hand eines Ausführungsbeispiels näher erläutert. Dabei zeigt
- Figur 1: eine schematische Darstellung, die die Temperatur in einem Vorkörper bei Bestrahlung mit Mikrowellen gegen ihre räumliche Ausdehnung aufträgt,
- Figur 2: ein Formwerkzeug nach dem Stand der Technik und
- Figur 3: eine schematische Ansicht einer Faserverbundbauteilherstellungsvorrichtung.
- Figur 4a: zeigt eine Versuchsanordnung, die teilweise gemäß dem Stand der Technik und teilweise erfindungsgemäß aufgebaut ist,
- Figur 4b: eine Querschnittsansicht entlang des Schnitts Z-Z nach Figur 4a und
- Figur 4c: vier Temperaturkurven, die die Temperatur der Versuchsanordnung nach Figur 4a im Randbereich über die Zeit aufträgt, wobei zwei Kurven die Temperaturentwicklung für ein Formwerkzeug nach dem Stand der Technik darstellen und zwei Kurven die Temperaturentwicklung für ein Formwerkzeug einer Faserverbundbauteilherstellungsvorrichtung.

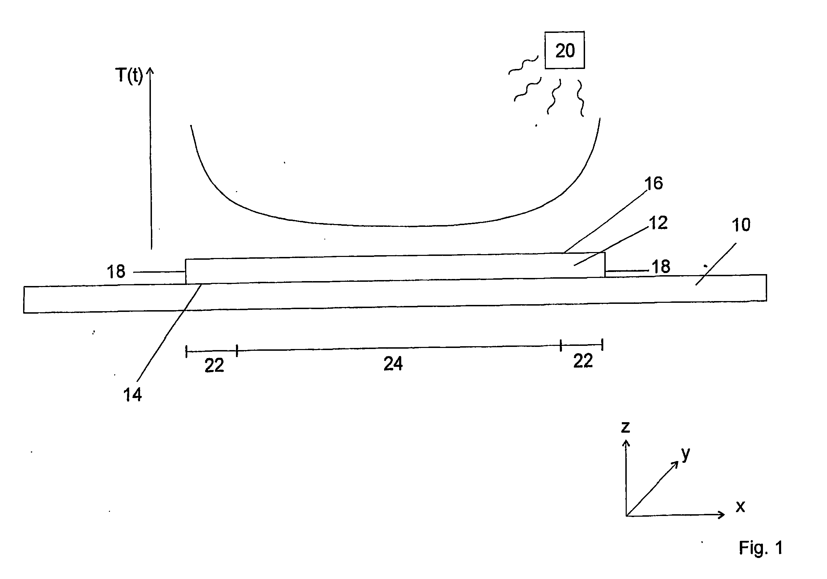

Figur 1 zeigt schematisch ein Formwerkzeug 10 aus Metall, im vorliegenden Fall aus Stahl, auf dem ein Vorkörper 12 in Form eines Laminats aus Fasern und Matrixmaterial aufgebaut ist. Der Vorkörper 12 ist im Wesentlichen quaderförmig mit einer Auflagefläche 14, einer der Auflagefläche 14 gegenüberliegenden Bestrahlungsfläche 16 und einem zwischen Auflagefläche 14 und Bestrahlungsfläche 16 angeordneten Vorkörperrand 18. Beim Bestrahlen des Vorkörpers 12 mit Mikrowellen aus einer Mikrowellenquelle 20 erwärmt sich der Vorkörper 12 und es stellt sich der gezeigte Temperaturverlauf T(x) ein. Es ist zu erkennen, dass die Temperatur T in einem Randbereich 22 deutlich höher ist als in einem Kernbereich 24 des Vorkörpers 12. Der Randbereich 22 erstreckt sich vom Vorkörperrand 18 bis ungefähr 10% einer Ausdehnung des Vorkörpers 12 nach innen. Der resultierende Temperaturgradient, das heißt, die Änderungen der Temperatur mit zunehmendem Abstand von dem Vorkörperrand 18, ist unerwünscht.

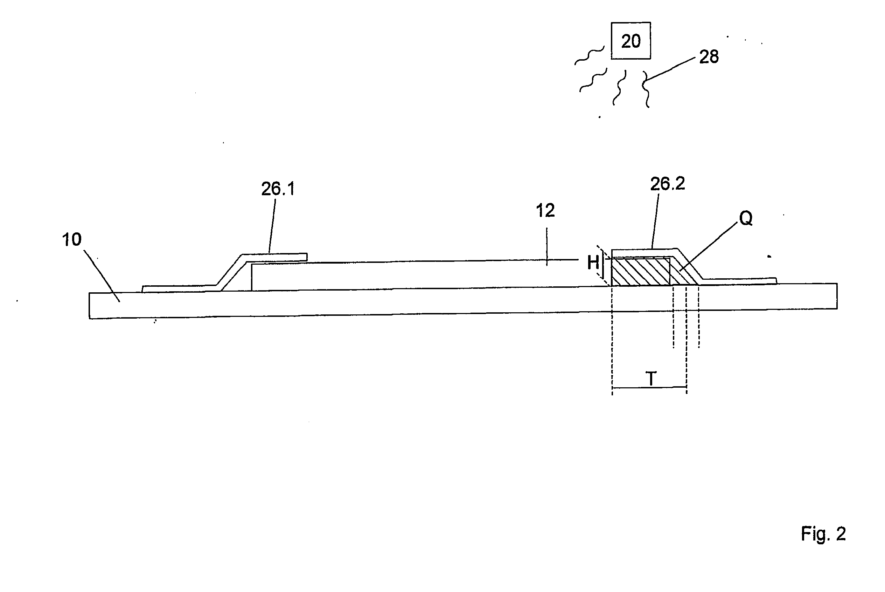

Figur 2 zeigt ein Formwerkzeug 10 nach dem Stand der Technik, das Abschirmungen 26.1, 26.2 besitzt. Die Abschirmungen 26.1, 26.2 bewirken eine Abschattung der von der Mikrowellenquelle 20 ausgehenden Mikrowellen 28 durch eine Hinterschneidung mit dem Querschnitt Q, so dass die Ausbildung des in Figur 1 gezeigten Temperaturgradienten vermindert wird. Eine mittlere Tiefe T des Querschnitts Q ist bevorzugt kleiner als 80 mm. Eine Höhe H ist bevorzugt kleiner als 50 mm.

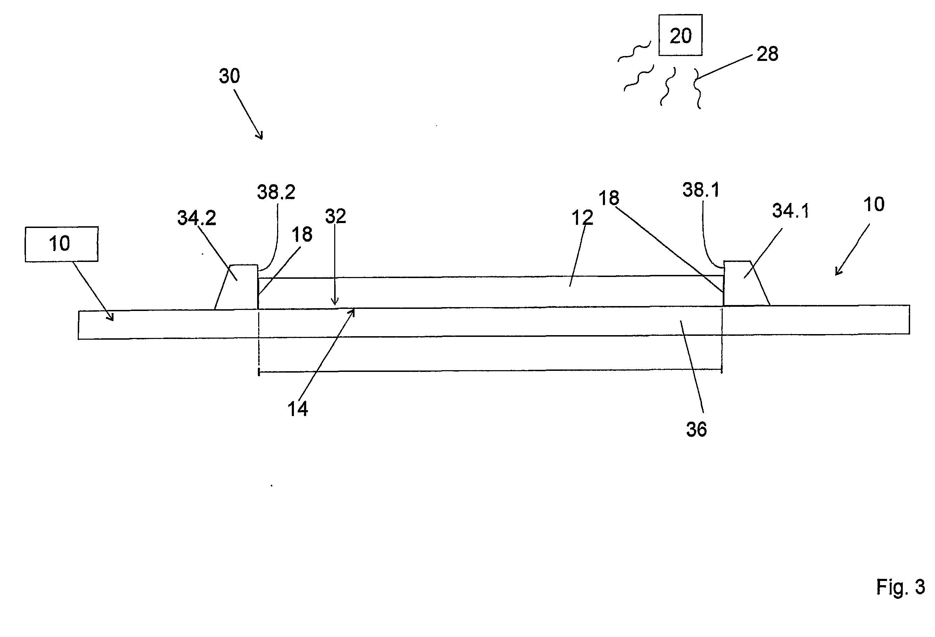

Figur 3 zeigt eine erfindungsgemäße Faserverbundbauteilherstellungsvorrichtung 30, zum Herstellen eines Faserverbundbauteils aus dem Vorkörper 12. Das Formwerkzeug 10, das Teil der Faserverbundbauteilherstellungsvorrichtung 30 ist, ist aus Metall gefertigt und besitzt eine Basisfläche 32, die beim Betrieb mit dem der Auflagefläche 14 des Vorkörpers 12 in Kontakt steht und im vorliegenden Fall im Wesentlichen eben ist. Die Basisfläche 32 muss jedoch nicht notwendigerweise eben sein, sondern kann im Prinzip jede beliebige Form haben. Um die Mikrowellen 28 nicht abzuschatten, ist die Basisfläche 32 hinterschneidungsfrei. Das heißt, dass es einen Standort für die Mikrowellenquelle 20 gibt, von der aus die Mikrowellen 28 jeden Punkt der Basisfläche auf direktem Weg erreichen können. Die Basisfläche 32 ist auch aus fertigungstechnischen Gründen vorteilhafterweise hinterschneidungsfrei. Für viele Anwendungen ist die Basisfläche konvex oder konkav oder besteht aus aneinander angrenzenden konvexen bzw. konkaven Teilflächen.

Von der Basisfläche 32 im Wesentlichen senkrecht nach oben erstrecken sich zwei Seitenelemente 34.1, 34.2 aus Metall. Diese können lösbar an einem Grundkörper 36, befestigt sein. Alternativ sind die Seitenelemente 34.1, 34.2 einstückig an dem Grundkörper 36 ausgebildet. Die Seitenelemente 34.1, 34.2 besitzen jeweilige Werkzeugränder 38.1, 38.2, die dem Vorkörperrand 18 des Vorkörpers 12 zugewandt sind und die an dem Vorkörperrand 18 anliegen. Die Werkzeugränder 38.1, 38.2 stehen hinterschneidungsfrei auf der Basisfläche 32, das heißt, dass ein aus dem Vorkörper 12 hervorgegangenes Faserverbundbauteil auch dann dem Formwerkzeug 10 entnommen werden kann, wenn es ideal starr ist. Dazu müssen die Seitenelemente 34.1, 34.2 nicht entfernt werden. Das wird insbesondere dann erreicht, wenn eine Projektion des Werkzeugrands 38.1, 38.2 auf die Basisfläche 32 außerhalb der Auflagefläche 14 liegt. In einer alternativen Ausführungsform kann ein Seitenelement oder können beide Seitenelemente 34.1, 34.2 lösbar und verschieblich mit dem Grundkörper 36 verbunden sein.

Die Faserverbundbauteilherstellungsvorrichtung 30 umfasst zudem die Mikrowellenquelle 20 und ein nicht eingezeichnetes Gehäuse, das Mikrowellen 28 reflektiert und verhindert, dass Mikrowellen 28 in eine Umgebung jenseits des Gehäuses abgestrahlt werden.

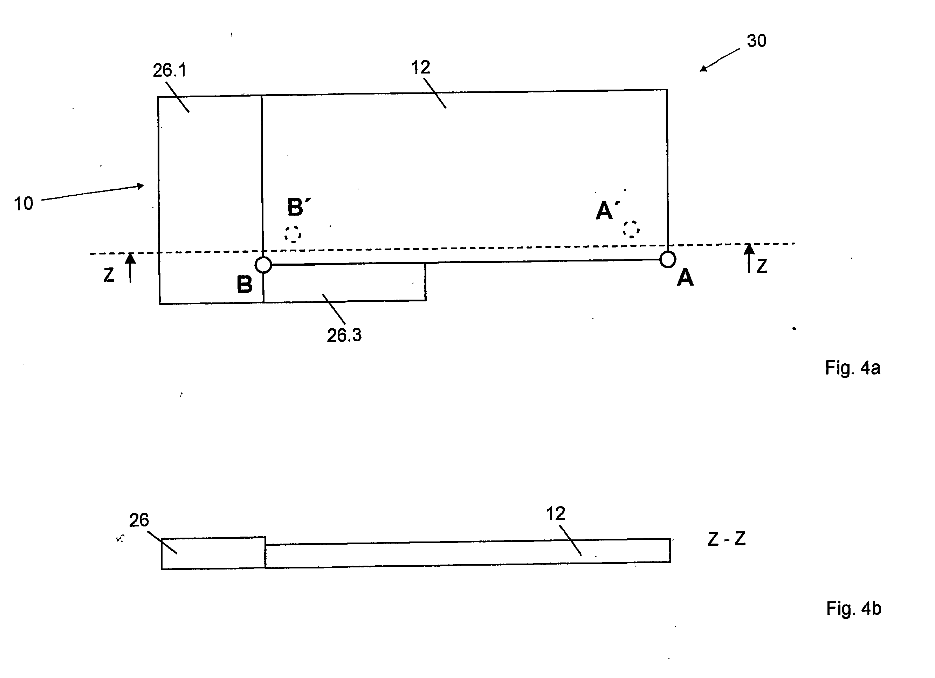

Figur 4a zeigt eine Faserverbundbauteilherstellungsvorrichtung 30, die ein nicht eingezeichnetes Pyrometer umfasst, das an den mit A' und B' gekennzeichneten Stellen die Temperatur T des Vorkörpers 12 misst. Über eine elektrische Steuerung kann die Mikrowellenquelle 20 (vgl. Figur 3) dann so angesteuert werden, dass ein vorgegebener Temperaturgradient oder eine vorgegebene maximale Temperatur auf dem Vorköper 12 nicht überschritten wird. Wenn der Temperaturgradient und bzw. oder die Temperatur zu hoch wird, so kann die elektrische Steuerung die Mikrowellenquelle in ihrer Leistung herab regeln, so dass sich die Temperaturunterschiede durch Wärmeleitungsprozesse in das Formwerkzeug 10 nivellieren bzw. zu hohe Temperaturen durch Wärmeleitung in Seitenelemente 34 des Formwerkzeugs 10 sinken. Zusätzlich können im Randbereich 22 Kühlkanäle eingebaut sein, die einer übermäßigen Erhitzung des Vorkörpers 12 oder der Ausbildung eines zu steilen Temperaturgradienten entgegenwirken.

Figur 4a zeigt einen Vorkörper 12, der in ein Formwerkzeug 10 eingelegt ist, das an seiner in Figur 4a linken Seite wie das Formwerkzeug gemäß Figur 3 und auf seiner rechten Seite wie ein Formwerkzeug gemäß Figur 2 aufgebaut ist. An den mit A bzw. B gekennzeichneten Stellen wird die Temperatur mit einem Thermoelement gemessen. In den mit gestrichelten Kreisen gezeigten Bereichen A' und B' wird die Temperatur des Vorkörpers 12 mit einem Pyrometer gemessen.

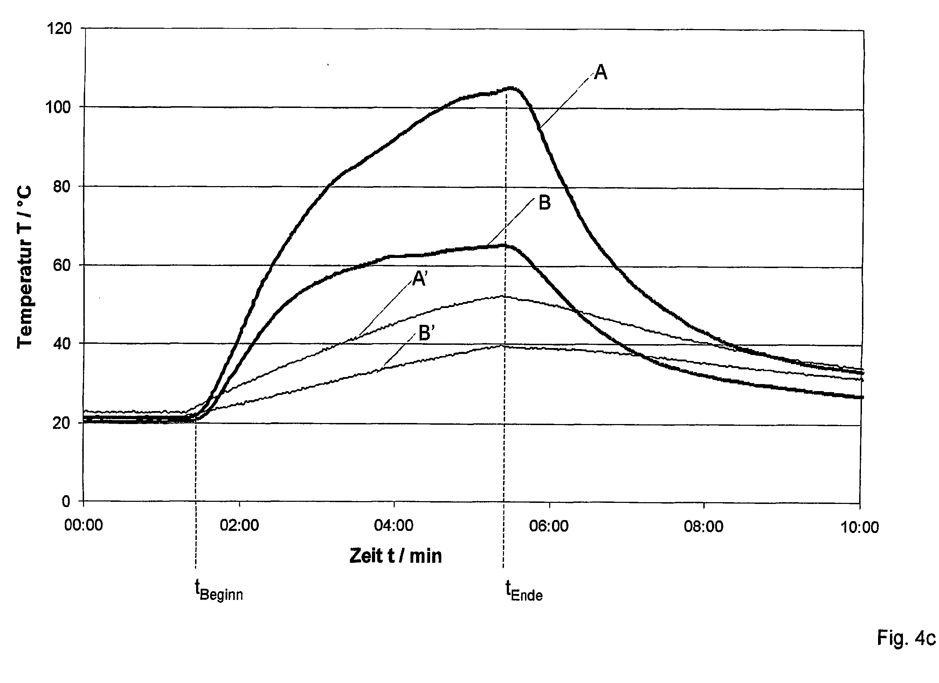

Die Figur 4b zeigt einen Querschnitt entlang Z-Z. Die aufgenommenen Temperatur-Kurven sind in Figur 4c gegen die Zeit aufgetragen, während der der Vorkörper 12 bei t_{Beginn} beginnend und t_{Ende} endend mit 800 W Mikrowellenleistung bestrahlt wurde. Es ist zu erkennen, dass die gemessenen Temperaturen auf der linken Seite deutlich geringer ansteigen, als auf der rechten Seite. Da die insgesamt angestrahlte Energie pro Flächeeinheit konstant ist, zeigt dies die homogenere Erwärmung des Vorkörpers 12, wenn ein erfindungsgemäßes Formwergzeug verwendet wird. Der Vorkörper 12 hat eine Breite von ungefähr 300 mm, eine Höhe von weniger als 20 mm, insbesondere weniger als 10 mm. Er besitzt zudem eine Tiefe von cirka 120 mm.

### Bezugszeichenliste:

- 10: Formwerkzeug
- 12: Vorkörper
- 14: Auflagefläche
- 16: Bestrahlungsfläche
- 18: Vorkörperrand
- 20: Mikrowellenquelle
- 22: Randbereich
- 24: Kernbereich
- 26.1, 26.2: Abschirmung
- 28: Mikrowelle
- 30: Faserverbundbauteilherstellungsvorrichtung
- 32: Basisfläche
- 34.1, 34.2: Seitenelement
- 36: Grundkörper
- 38.1, 38.2: Werkzeugrand

## Patentansprüche

1. Verfahren zum Herstellen eines Faserverbundbauteils, mit den Schritten:
(a) Einbringen eines Vorkörpers (12),
der aus Fasern und Matrixmaterial besteht und einen umlaufenden Vorkörperrand (18) besitzt,
in ein metallisches Formwerkzeug (10),
wobei die Fasern Kohlenstofffasern umfassen, und
(b) abschattungsfreies Bestrahlen des Vorkörpers (12) mit Mikrowellen (28), wobei die Mikrowellen direkt auf den Vorkörpertreffen, so dass ein Faserverbundbauteil entsteht,
(c) der Vorkörper (12) so in das Formwerkzeug (10) eingebracht wird, dass der Vorkörperrand (18) zumindest abschnittsweise in elektrischen Kontakt mit dem Formwerkzeug (10) gebracht wird, wobei
(d) zum Bestrahlen Mikrowellen (28) mit einer Intensität verwendet werden, die so gering gewählt ist, dass eine Lichtbogenbildung im Wesentlichen unterdrückt wird.

2. Verfahren nach Anspruch 1, **dadurch gekennzeichnet, dass** der Vorkörper (12) im Wesentlichen vollständig mit dem Vorkörperrand (18) in Kontakt mit dem Formwerkzeug (10) gebracht wird.

3. Verfahren nach einem der vorstehenden Ansprüche, **dadurch gekennzeichnet, dass** der Vorkörper (12) in ein gekühltes Formwerkzeug (10) eingebracht wird.

4. Verfahren nach Anspruch 3, **dadurch gekennzeichnet, dass** der Vorköper (12) in ein aktiv gekühltes Formwerkzeug (10) eingebracht wird.

5. Verfahren nach Anspruch 3 oder 4, **dadurch gekennzeichnet, dass** der Vorköper (12) in ein Formwerkzeug (10) eingebracht wird, das an Stellen gekühlt wird, die mit dem Vorkörperrand (18) in Kontakt stehen.

6. Verfahren nach einem der vorstehenden Ansprüche, **gekennzeichnet durch** einen nachfolgenden Arbeitsschritt, insbesondere Verformen, Umformen, Biegen, Lackieren, Reinigen, Zerspanen, Polieren, Beschleifen, Erodieren, Beschichten und/oder Verbauen.

## Claims

1. A method for producing a fiber-composite component, with the steps of:
(a) introducing a preform (12), which consists of fibers and matrix material, into a mold (10), the preform (12) having a peripheral preform border (18), and
(b) irradiating the preform (12) with microwaves (28), so that a fiber-composite component is created,
**characterized in that**
(c) the preform (12) is introduced into the mold (10) in such a way that the preform border (18) is brought into contact with the mold (10) at least partly, wherein
(d) microwaves (28) with an intensity that is chosen low enough that arcing is substantially suppressed are used for the irradiation.

2. The method as claimed in claim 1, **characterized in that** the preform (12) is brought into contact with the mold (10) substantially completely with the preform border (18).

3. The method as claimed in one of the preceding claims, **characterized in that** the preform (12) is introduced into a cooled mold (10).

4. The method as claimed in claim 3, **characterized in that** the preform (12) is introduced into an actively cooled mold (10).

5. The method as claimed in claim 3 or 4, **characterized in that** the preform (12) is introduced into a mold (10) being cooled at points that come into contact with the preform border (18).

6. The method as claimed in one of the preceding claims, **characterized by** a subsequent working step, in particular deforming, forming, bending, painting, cleaning, machining, polishing, grinding, eroding, coating and/or fitting.

## Revendications

1. Procédé de fabrication d'une pièce en matériau composite renforcé par des fibres, comprenant les étapes suivantes :
(a) introduction d'un corps précurseur (12), qui se compose de fibres et d'un matériau de matrice et qui possède une bordure de corps périphérique (18), dans un outil de moulage métallique (10), les fibres comprenant des fibres de carbone, et
(b) irradiation sans ombrage du corps précurseur (12) avec des micro-ondes (28), telles que les micro-ondes tombent directement sur le corps précurseur de telle façon qu'il en résulte une pièce en matériau composite renforcé par des fibres,
(c) introduction du corps précurseur (12) dans l'outil de moulage (10) de telle façon que la bordure de corps (18) est amenée au moins localement en contact électrique avec l'outil de moulage (10), et
(d) utilisation, pour l'irradiation, de micro-ondes (28) avec une intensité qui est choisie aussi faible que l'on inhibe sensiblement la formation d'un arc électrique.

2. Procédé selon la revendication 1, **caractérisé en ce que** le corps précurseur (12) est amené sensiblement entièrement avec la bordure de corps (18) en contact avec l'outil de moulage (10).

3. Procédé selon l'une des revendications précédentes, **caractérisé en ce que** le corps précurseur (12) est introduit dans un outil de moulage refroidi (10).

4. Procédé selon la revendication 3, **caractérisé en ce que** le corps précurseur (12) et introduit dans un outil de moulage (10) refroidi de manière active.

5. Procédé selon la revendication 3 ou 4, **caractérisé en ce que** le corps précurseur (12) est introduit dans un outil de moulage (10) qui est refroidi aux emplacements qui sont en contact avec la bordure de corps (18).

6. Procédé selon l'une des revendications précédentes, **caractérisé par** une étape de travail successive, en particulier une déformation, une mise en forme, un cintrage, l'application d'une peinture, un nettoyage, un usinage, un polissage, un meulage, une érosion, l'application d'un revêtement et/ou un montage.
